# EUROPÄISCHE PATENTSCHRIFT

(11) **EP 3 694 048 B1**
(45) Veröffentlichungstag und Bekanntmachung des Hinweises auf die Patenterteilung: **14.04.2021**
(21) Anmeldenummer: 20153761.0
(22) Anmeldetag: 27.01.2020
(51) Int. Cl.: H01Q 1/22, H01Q 9/42, H01Q 21/24, G06K 7/10, B65B 41/16

(54) **ANTENNE FÜR EINEN RFID-LESER UND VERFAHREN ZUM IDENTIFIZIEREN EINER ROLLE**
ANTENNA FOR A RFID READER AND METHOD OF IDENTIFYING A ROLL
ANTENNE POUR UN LECTEUR RFID ET PROCÉDÉ D'IDENTIFICATION D'UN RÔLE

(30) Priorität: 08.02.2019 DE 102019103102
(43) Veröffentlichungstag der Anmeldung: 12.08.2020
(73) Patentinhaber: SICK AG, 79183 Waldkirch (DE)
(72) Erfinder: Pudenz, Florian, 22359 Hamburg (DE)

(56) Entgegenhaltungen:
- EP-A1- 3 339 225
- DE-U1-202006 020 103
- US-A- 4 083 051

## Beschreibung

Die Erfindung betrifft eine Vorrichtung mit einer Halterung und einer Rolle sowie mit einer RIFD-Lesevorrichtung mit Antenne.

RFID-Leser dienen dazu, durch Auslesen von RFID-Transponder Objekte automatisch zu identifizieren. Der RFID-Leser regt über seine Antenne durch elektromagnetische Strahlung in seinem Lesebereich befindliche RFID-Transponder zur Abstrahlung der gespeicherten Information an, empfängt die entsprechenden Transpondersignale und wertet sie aus. Dazu wird häufig der UHF-Frequenzbereich (Ultrahochfrequenz) verwendet, da es hier in dem Standard ISO 18000-6 einen etablierten Rahmen gibt und zudem Transponder in unterschiedlichen Entfernungen von einigen Millimetern bis hin zu mehreren Metern ausgelesen werden können.

Nicht in allen der zahlreichen unterschiedlichen RFID-Anwendungen lassen sich Standardantennen einsetzen. Ein Anwendungsbeispiel mit Bedarf für eine Sonderantenne ist eine Verpackungsmaschine. Darin dient eine sogenannte Mandrel als Halterung für einzelne Rollen des Rohmaterials für die Verpackungen. Das Rohmaterial selbst ist auf eine Papierrolle aufgewickelt, die beim Abwickeln auf der Mandrel abrollt. Auf der Innenseite der Papierrolle ist ein RFID-Transponder angebracht, der gelesen werden soll, um die jeweilige Rolle des Rohmaterials zu identifizieren.

Die Schwierigkeit liegt darin, die Rollen bereits direkt nach dem Einsetzen in die Verpackungsmaschine zu identifizieren. Zu diesem Zeitpunkt ist die Ausrichtung der Rolle und damit die Lage des RFID-Transponders unbestimmt. Die axiale Position lässt sich durch Übereinkunft festlegen, indem der RFID-Transponder immer in einem bestimmten Abstand von der seitlichen Öffnung angebracht wird. Die Position in Umfangsrichtung hängt aber von dem für praktische Belange zufälligen Einlegevorgang ab. Soll die Rolle identifiziert werden, bevor sie sich bewegt, so muss der RFID-Transponder in jeder erdenklichen Winkellage von der Antenne und dem daran angeschlossenen RFID Reader gelesen werden können.

Nun lässt sich die Antenne direkt in der Umgebung der Rolle beispielsweise in einer Halterung der Mandrel unterbringen, so dass die Entfernung zwischen Antenne und RFID-Transponder gering bleibt. Einschränkungen in der Funkstrecke durch metallische Objekte, nämlich eine metallische Welle der Mandrel sowie metallische Lagen des Verpackungsmaterials, machen die Kommunikation jedoch schwierig. Eine Optimierung der Position oder eine Ausrichtung des Transponders ist aufgrund der Rahmenbedingungen in der Verpackungsmaschine nicht möglich. Auch die Sendeleistung lässt sich nur eingeschränkt erhöhen. Zum einen ist die Sendeleistung für RFID-Anwendung grundsätzlich begrenzt, zum anderen muss sichergestellt werden, dass bei Bestückung mit mehreren Rollen nur der RFID-Transponder der gewünschten Rolle und nicht der benachbarten Rolle gelesen wird.

In einer herkömmlichen Lösung für die genannte Anwendung an der Verpackungsmaschine werden als Antennen zwei orthogonal angeordnete, linear polarisierte Dipolantennen verwendet, die über einen Wilkinson-Leistungsteiler miteinander verkoppelt sind. Durch die Kombination der beiden Elemente ergibt sich wiederum eine linear polarisierte Abstrahlung.

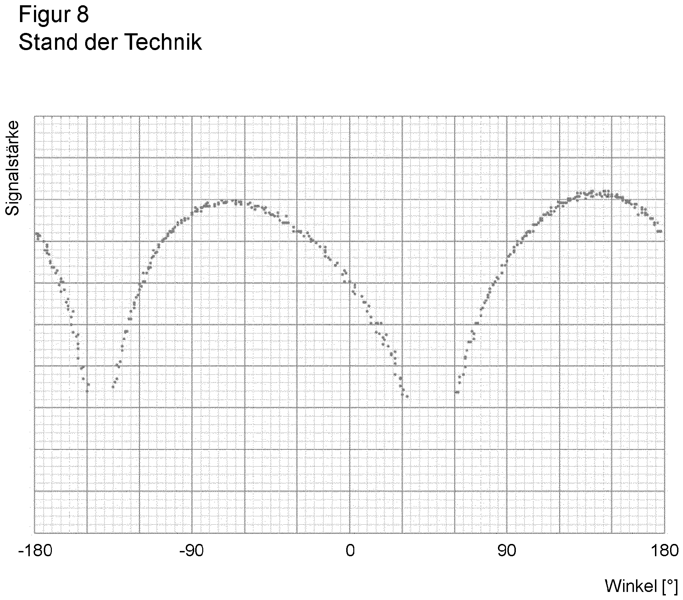

Figur 8 zeigt beispielhaft den Signalpegel (RSSI, Received Signal Strength Indication) als Funktion der Winkellage des Transponders je nach Drehstellung der Rolle. Es sind sehr deutliche Minima in ungünstigen Winkellagen zu erkennen, in denen es durch die Metallwelle oder die aufgewickelte Metalllage zu einer Verschattung des RFID-Transponders kommt. Dort kann der RFID-Transponder nicht richtig gelesen werden. Die Kommunikation reißt ab, da die Dämpfung auf der Funkstrecke so groß wird, dass entweder der RFID-Transponder nicht mehr genug Energie zum Aufwachen erhält, oder der Signalpegel der Antwort des RFID-Transponders ist so klein, dass der RFID-Leser sie nicht mehr auswerten kann.

Unabhängig von der beschriebenen Anwendung zu Identifizierung einer Rolle in einer Verpackungsmaschine sind im Stand der Technik zahlreiche andere Antennenformen bekannt. Sogenannte Inverted-F-Antennen werden in vielen kompakten und mobilen Geräten verbaut. Den Namen tragen diese Antennen wegen ihrer F-Form. Die Querstriche sind aus der Einspeiseleitung und einer zusätzlichen seitlichen Kurzschlussverbindung zur Massefläche gebildet, der Hauptstrich ist der eigentliche Antennenarm. Eine häufige besonders flache und kompakte Bauform ist die sogenannte PIF-Antenne (PIFA, planar inverted-f antenna), die als Patchantenne in Mikrostreifentechnik direkt auf einer Leiterplatte integriert werden kann.

Die EP 3 367 504 A1 offenbart eine Antenne für eine RFID-Lesevorrichtung mit vier inverted-F-Antennen, die für eine zirkulare Polarisation mit einer Speiseschaltung phasenversetzt angesteuert werden. Das ist jedoch ein Beispiel für eine Standard-Bauform, die für die beschriebene spezielle Anwendung ungeeignet ist. Außerdem muss die Speiseschaltung wegen des Phasenversatzes relativ aufwändig sein. Aus der EP 3 217 472 A1 ist eine ähnliche Lösung bekannt, die statt inverted-F-Antennen kapazitiv aufgeladene Antenne verwendet (CLL, capacitive loaded loop). Dieser Unterschied behebt die genannten Nachteile nicht.

Die US 2009/0179816 A1 beschreibt ein Antennensystem mit zwei PIFAs, die in einer Ebene und an ihren Fußpunkten zueinander zu einem rechten Winkel angeordnet sind. Eine der PIFAs wird mit einem Phasenversatz von 90° angesteuert, um insgesamt zirkular polarisierte Wellen zu erzeugen. Die Ansteuerung mit Phasenversatz erfordert ein entsprechend komplexes Speisenetzwerk. Mit der gegenläufigen Ausrichtung, also der Tatsache, dass beide PIFAs von dem gemeinsamen Fußpunkt fortweisen, wird dennoch keine gute zirkulare Polarisation erreicht. Außerdem könnte diese Antenne in dieser Bauform in der genannten Anwendung an einer Verpackungsmaschine rein mechanisch nicht montiert werden. Die JP 2016/025480 A zeigt eine verwandte Antennenkonfiguration, deren Massefläche rein baulich die Montage in der Verpackungsmaschine nicht zuließe. Weitere Beispiele für Dokumente mit einer zirkular polarisierten Antenne aus mehreren Inverted-F-Antennen und vergleichbaren Nachteilen sind die die WO 2018/180873 A1 oder die WO 2018/180875 A1.

In der Arbeit von Huang, John. "A technique for an array to generate circular polarization with linearly polarized elements." IEEE Transactions on antennas and propagation 34.9 (1986): 1113-1124 werden zirkular polarisierte Felder durch Kombination mehrerer linear polarisierter Antennenelementen diskutiert. Das geschieht aber auf eher grundlegender Ebene ohne besonderes Augenmerk auf konkrete Bauformen, und soweit Anordnungen beschrieben sind, handelt es sich um Matrixkonfigurationen, die in der oben diskutierten Anwendung nicht untergebracht werden könnter

Die EP 3 339 225 A1 offenbart eine Halterung für eine Rolle einer Verpackungsmaschine. In der Halterung wird ein Hohlraum eingebracht und darin ein Transceiver zum Lesen eines Tags auf der Rolle angeordnet. Der Transceiver weist eine Antenne mit zwei zueinander senkrechten Dipolen auf.

Aus der DE 20 2006 020103 U1 ist eine Inverted F-Antenne für tragbare Telefon- und Navigationsgeräte bekannt. In einer Ausführungsform werden zwei derartige Antennen im rechten Winkel zueinander auf einer Platine mit Massebezugsfläche angeordnet.

Die US 4 083 051 A befasst sich mit zirkular polarisierten Antenne aus zueinander verkippten Dipolen.

Es ist daher Aufgabe der Erfindung, eine verbesserte Antenne für einen RFID-Leser anzugeben.

Diese Aufgabe wird durch eine Vorrichtung nach Anspruch 1 gelöst.

Die Antenne weist mindestens zwei linear polarisierte Einzelantennen auf, die mit einer Speiseschaltung verbunden sind. Die Einzelantennen sind zueinander verkippt, sie bilden dadurch praktisch die Schenkel eines Winkels, der als Innenwinkel bezeichnet wird. Gemeinsam erzeugen die Einzelantennen eine zirkulare Polarisation. Damit soll auch eine elliptische Polarisation mit ausreichend kleinem Achsenverhältnis umfasst sein.

Die Erfindung geht von dem Grundgedanken aus, den Bereich des Innenwinkels, den die beiden Schenkel einschließen, mindestens teilweise freizulassen. Dort wird sich folglich ein Leer- oder Freiraum gelassen, in dem sich ein anderes Objekt befinden kann. Dabei ist insbesondere an die einleitend diskutierte Anwendung an einer Verpackungsmaschine gedacht, wo die Rolle mindestens teilweise in dem Freiraum angeordnet ist. Herkömmliche Antennen hätten anstelle des Freiraums ihre Massefläche oder weitere Einzelantennen, womit ein Objekt wie die Rolle gegenüber der Antenne nur in ungünstiger Anordnung oder mit Abstand positioniert werden könnte.

Die Rolle ist vorzugsweise zumindest teilweise in dem Freiraum angeordnet. Der RFID-Leser nutzt die Antenne zum Senden von RFID-Signalen an einen RFID-Transponder und/oder zum Empfangen von RFID-Signalen von einem RFID-Transponder. Der RFID-Leser weist dazu eine Auswertungseinheit zum Eincodieren einer RFID-Information in die RFID-Signale und/oder zum Auslesen einer RFID-Information aus den RFID-Signalen auf. Ein RFID-Transponder auf einer in der Halterung befindlichen Rolle kann unabhängig von deren Drehstellung gelesen werden. Halterung und Rolle können metallische Teile aufweisen, welche die Funkstrecke beeinträchtigen. Der Vorteil der erfindungsgemäßen zirkular polarisierten Antenne ist, dass der RFID-Transponder auch vor einer Drehbewegung oder bei schneller Drehbewegung gelesen werden kann. Bei herkömmlicher Antenne würde dabei die Kommunikationsverbindung in ungünstigen Drehstellungen wie in den Minima der Figur 8 abreißen. Die erfindungsgemäße Antenne kann an verschiedene Formfaktoren angepasst und damit in verschiedenen Vorrichtungen eingesetzt werden.

Die Erfindung hat den Vorteil, dass eine zirkular polarisierte Antenne realisiert ist, die für das Lesen von RFID-Transpondern unbekannter Orientierung besonders geeignet ist. Die in Figur 8 gezeigte, von der Winkelstellung abhängige Schwankung des Signalpegels wird dadurch deutlich reduziert. Es kommt nicht mehr zu Unterbrechungen der Verbindung, der RFID-Transponder kann in jeder Winkellage gelesen werden. Aufgrund der Bauform der Antenne samt Freiraum ist eine enge Montage zu einem Objekt wie der Rolle mit Verpackungsmaterial möglich, das sich im Freiraum befindet. Dabei werden unter den gegebenen Randbedingungen ein hoher Antennengewinn und ein geringes Achsenverhältnis erreicht, die eine Kommunikation mindestens über den Freiraum und beispielsweise über die Rolle in jeder Winkelposition ermöglichen.

Der Innenwinkel ist vorzugsweise ein rechter Winkel. Ein Toleranzbereich von zumindest einigen Grad, beispielsweise ein Winkelbereich von 80°-100°, ist davon noch umfasst. Ein rechter Winkel verspricht das geringste Achsenverhältnis, gewisse Winkelabweichungen verschlechtern das zunächst nur graduell.

Die Antenne ist bevorzugt in einem L-förmigen Gehäuse untergebracht, dessen Schenkel den Innenwinkel bilden. Ein solches Gehäuse dient beispielsweise zugleich als Halterung für die Mandrel oder lässt sich zumindest mit einer solchen Halterung verbinden. Der L-Winkel ist vorzugsweise ein rechter Winkel, aber eine zumindest leicht verzogene L-Form mit abweichendem Innenwinkel ist auch denkbar.

Die Antenne weist bevorzugt mindestens eine zusätzliche linear polarisierte Einzelantenne in einem Winkel kleiner dem Innenwinkel zu den beiden Einzelantennen auf. Die zusätzliche Einzelantenne kann die zirkulare Polarisation weiter verbessern. Vorzugsweise wird der Innenwinkel gleichmäßig verkleinert. Beispielsweise steht bei zwei Einzelantennen im rechten Winkel zueinander eine dritte Einzelantenne im Winkel von 45°.

Die zusätzliche Einzelantenne ist bevorzugt zwischen den beiden Einzelantennen angeordnet. Bei einer L-Form wäre das die Position in etwa in der Spitze. Die zusätzliche Einzelantenne ergänzt in dieser Position sowohl durch ihre Lage als auch vorzugsweise ihren Winkel möglichst kontinuierlich die beiden Einzelantennen.

Die Einzelantennen sind vorzugsweise gemeinsam im Uhrzeigersinn oder gemeinsam gegen den Uhrzeigersinn ausgerichtet. Die Einzelantennen haben in ihrer linearen Richtung entsprechend ihrer linearen Polarisation eine Struktur, die auch eine gespiegelte Ausrichtung zulässt. Nach dieser bevorzugten Ausführungsform wird vermieden, gespiegelte und nicht gespiegelte Einzelantennen zu mischen. Die Einzelantennen lassen sich also ohne Spiegelung ineinander überführen, indem sie auf einer dem Innenwinkel folgenden Linie verschoben werden. Nochmals anders ausgedrückt sind die Einzelantennen in der Drehrichtung der zirkularen Polarisation ausgerichtet.

Die Speiseschaltung steuert die Einzelantennen vorzugsweise phasengleich an. Das ist im Zusammenhang mit einer zirkularen Polarisation aus linear polarisierten Einzelantennen sehr überraschend, die herkömmlich immer entsprechend ihrer unterschiedlichen Winkelorientierung phasenversetzt angesteuert werden. Tatsächlich hat sich aber gezeigt, dass bei der im Vorabsatz beschriebenen Ausrichtung der Einzelantennen eine zusätzliche Phasenverschiebung der Einzelsignale nicht notwendig und für das Achsenverhältnis sogar hinderlich ist. Phasenschieber, Umwegleitungen oder dergleichen für einen Phasenversatz sind demnach in der Speiseschaltung vorzugsweise gar nicht vorhanden, der Aufwand für Platz und Komplexität der Schaltung kann entsprechend reduziert werden.

Die Einzelantennen sind bevorzugt Antennen des Typs Inverted-F-Antenne wie einleitend kurz beschrieben. Solche Einzelantennen sind F-förmig, wobei der senkrechte Hauptstrich eine Monopolantenne bildet, jedoch mit einem zusätzlichen Kurzschluss als oberen Querstrich neben einem Einspeisepunkt an dem unteren Querstrich. Für diese speziellen Einzelantennen ist die in den Vorabsätzen erläuterte Ausrichtung an der F-Form orientiert, die vorzugsweise für keine der Einzelantennen gespiegelt zu den anderen ist. Der Fußpunkt der F-Form ist bevorzugt in die einheitliche Drehrichtung der zirkularen Polarisation ausgerichtet.

Noch bevorzugter sind die Einzelantennen PIFA-Antennen (Planar Inverted-F Antenna). Somit werden die Strukturen der Einzelantennen durch Mikrostreifen auf einer Leiterplatte gebildet (Patchantenne). Die konkrete Form solcher PIFA-Antennen kann auf der Oberfläche der Leiterplatte, aber sogar auch unter Einbeziehung der Platinenstruktur in Schichten, Tiefenrichtung oder auf der Rückseite sehr variabel gestaltet werden. Beispielsweise kann sich die Kurzschlussleitung auf der Rückseite der Leiterplatte hinter dem Einspeisepunkt befinden, um den Flächenbedarf zu verringern. Allgemein ergeben sich viele Freiheitsgrade für das Design der Einzelantennen und die Gestaltung der Antenne als Ganzes sowie eines Gehäuses oder sonstiger Komponenten, in das die Antenne eingebunden werden soll.

Die Vorrichtung ist bevorzugt als Verpackungsmaschine ausgebildet, und die Halterung weist eine Mandrel zum rotierbaren Halten einer Rolle mit aufgewickeltem flächigem Verpackungsmaterial auf. Die erfindungsgemäße Antenne sitzt vorzugsweise in der Halterung, die auch die Drehachse der Mandrel für die darauf abrollende Rolle mit dem Vorrat an flächigem Verpackungsmaterial trägt. Dies entspricht der einleitend erläuterten Anwendung.

Die Halterung mit der Antenne umfasst bevorzugt nur einen Teil des Umfangs der Rolle. Das betrifft den Teil der Antenne mit der Halterung, es kann weitere Halterungsteile ohne Antenne geben. Bevorzugt ist die Halterung mit der Antenne L-förmig unter Einschluss eines Innenwinkels von ungefähr 90°.

Die Vorrichtung weist bevorzugt mehrere Halterungen für mehrere Rollen auf, wobei die Halterungen jeweils eine erfindungsgemäße Antenne aufweisen, die mit dem RFID-Leser verbunden sind, um eine jeweilige Rolle in einer Halterung mit einem Multiplexverfahren zu identifizieren. Beispielsweise weist die Vorrichtung zwei Rollen samt Mandrel, Halterung und Antenne nebeneinander auf. Dann stellt sich die zusätzliche Herausforderung, dass die im Multiplexing jeweils aktive Antenne auch den RFID-Transponder der richtigen, zugeordneten Rolle und nicht der anderen Rolle liest, und auch dazu trägt das erfindungsgemäße Antennendesign bei.

Bei einem Verfahren wird eine Rolle identifiziert, die auf einer Mandrel einer Halterung angeordnet ist, wobei ein RFID-Transponder der Rolle von einem RFID-Leser mittels einer erfindungsgemäßen Antenne der Halterung unabhängig von der Drehstellung der Rolle gelesen wird, insbesondere ohne dass beziehungsweise bevor die Rolle rotiert. Das wäre zumindest in einigen Drehstellungen gemäß Figur 8 mit einer herkömmlichen Antenne nicht möglich.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Ansicht einer Rolle mit RFID-Transponder in einer Halterung mit einer Antenne eines RFID-Lesers;
- Fig. 2: eine weitere schematische dreidimensionale Ansicht der in der Halterung rotierenden Rolle;
- Fig. 3: eine schematische Darstellung einer Ausführungsform einer Antenne für einen RFID-Leser mit zwei zueinander um einen Innenwinkel verkippten Einzelantennen;
- Fig. 4: eine schematische Darstellung einer weiteren Ausführungsform einer Antenne ähnliche Figur 3 mit einer zusätzlichen Einzelantenne zwischen den beiden Einzelantennen;
- Fig. 5: eine Darstellung eines beispielhaften Antennendesigns zu der schematischen Darstellung gemäß Figur 3;
- Fig. 6: eine schematische Darstellung einer Verpackungsmaschine mit zwei Rollen und zwei im Multiplexverfahren betriebenen Antennen zu deren Identifikation;
- Fig. 7: eine schematische Darstellung gemäß Figur 6, in dem nun im Rahmen des Multiplexverfahrens die aktive Antenne gewechselt hat; und
- Fig. 8: eine Darstellung der Signalstärke eines RFID-Transponders auf einer Rolle in Abhängigkeit von deren Winkelstellung bei Verwendung einer herkömmlichen Antenne.

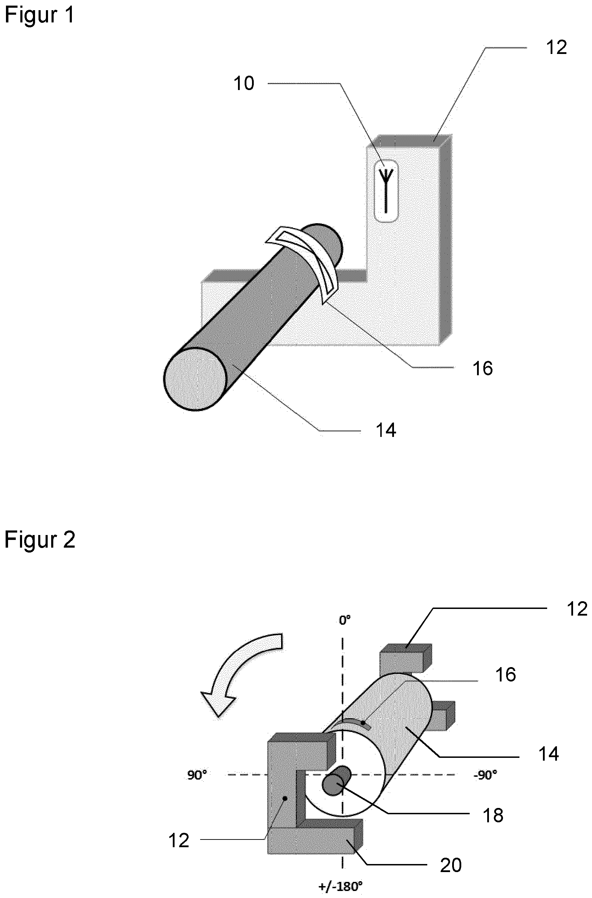

Figur 1 greift das Anwendungsbeispiel der Einleitung zunächst verallgemeinernd auf und zeigt eine Antenne 10 integriert in eine Halterung 12. Eine Rolle 14 ist hier nur ganz schematisch in der Halterung 12 angeordnet. Ein nicht dargestellter RIFD-Leser soll mittels der Antenne 10 einen RFID-Transponder 16 der Rolle 14 lesen und die Rolle 14 dadurch identifizieren.

Figur 2 ist eine weitere Darstellung der bezüglich der Halterung 12 rotierenden Rolle 14. Die Antenne 10 befindet sich in der Halterung 12 aus Kunststoff und ist hier nicht zu sehen. Die Rolle 14 rotiert auf einer metallischen Welle 18, die auch als Mandrel bezeichnet wird. Neben der L-förmigen Halterung 12 mit der Antenne kann es weitere Halteelemente 20 geben, die beispielsweise die Mandrel zusätzlich stützen oder die Verbindung zu der übergeordneten Maschine bilden. Der RFID-Transponder 16 befindet sich in der Regel nicht außen wie in der vereinfachten Darstellung, sondern innen in der Rolle 14 oder jedenfalls unterhalb des auf der Rolle 14 aufgewickelten Materials.

Die besondere Herausforderung besteht nun darin, den RIFD-Transponder 16 in jeder Winkelstellung der Rolle 14 zu lesen. Die Identifikation soll nämlich unabhängig von der Drehbewegung der Rolle 14 bleiben, also insbesondere schon vor dem Drehen der Rolle 14 beziehungsweise auch bei schnellem Drehen möglich sein. Die Antenne 10 befindet sich nur innerhalb der L-förmigen Halterung 12 an einem Ende der Welle 18. Das maximal verfügbare Volumen ist baulich durch die Maschine vorgegeben. Die Lage des RFID-Transponders 16 ist je nach Winkelstellung sehr ungünstig, da es Abschirmungseffekte durch die metallische Welle 18 sowie womöglich eine metallische Schicht von auf der Rolle 14 aufgewickeltem Material gibt. Damit ähnelt der Aufbau einer Koaxialleitung, wobei der RFID-Transponder 16 jedoch auf der äußeren Schirmfläche angebracht ist. Die Kommunikationsfähigkeit des RIFD-Transponders 16 ist dadurch enorm eingeschränkt, und eine störungsfreie Kommunikation ist nur mit einer optimierten Antenne 10 möglich. Wenn auf der Rolle 14 ein Material ohne Metall aufgewickelt und/oder die Welle 18 nicht aus Metall ist, vereinfacht sich die Problemstellung und wird durch die erfindungsgemäße Antenne 10 erst recht gelöst.

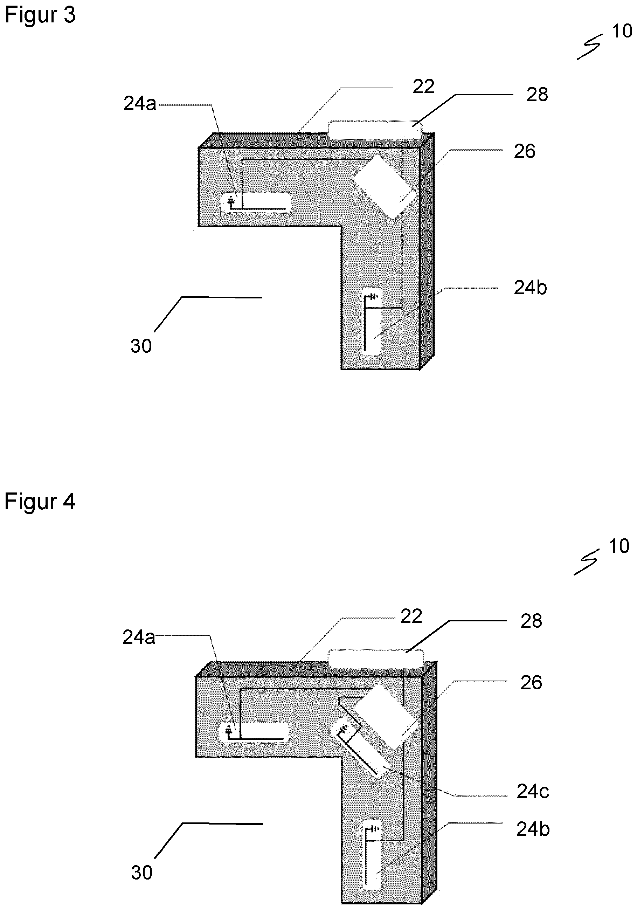

Figur 3 zeigt den schematischen Aufbau einer Ausführungsform der Antenne 10. In einem Gehäuse 22 befinden sich zwei linear polarisierte Einzelantennen 24a-b. Das Gehäuse 22 kann mit der Halterung 12 identisch, darin integriert oder daran befestigt sein. Die Einzelantennen 24a-b werden über eine Speiseschaltung 26 beispielsweise mit einem Leistungsteiler angesteuert. Die Speiseschaltung 26 ist mit einem Anschluss 28 der Antenne 10 für einen RFID-Leser verbunden.

Die beiden Einzelantennen 24a-b sind in dieser Ausführungsform inverted-F-Antennen. Ein dem Hauptstrich der F-Form entsprechender Arm der jeweiligen Einzelantenne 24a-b ist über eine Speiseleitung, die den rechten Querstrich der F-Form bildet, an die Speiseschaltung 26 angeschlossen. In Abwandlung einer Monopolantenne ist neben der Speiseleitung ein zusätzlicher Kurzschluss vorgesehen, der den linken Querstrich der F-Form bildet. So kann die Länge der Monopolantenne, bezogen auf eine Auslegung für die gleiche Frequenz, deutlich reduziert werden. Inverted-F-Antennen können besonders kompakt als PIFA (Planar inverted-F-Antenne) aufgebaut werden. Alternativ zu inverted-F-Antennen wären auch andere linear polarisierte Antennen vorstellbar. Dazu zählen Monopolantennen, wenn die baulichen Nachteile in Kauf genommen werden, CLL-Antennen wie in der einleitend genannten EP 3 217 472 A1 oder PIC-Antennen (planar inverted cone antenna).

Um der Herausforderung gerecht zu werden, RFID-Transponder 16 in jeder Winkelstellung der Rolle 14 zu lesen, sollen die Einzelantennen 24a-b gemeinsam ein zirkular polarisiertes Feld erzeugen. Die Antenne 10 ist also insgesamt zirkular oder zumindest elliptisch und damit näherungsweise zirkular polarisiert. Eine herkömmliche zirkular polarisierte Antenne könnte unter den gegebenen baulichen Randbedingungen nicht verwendet werden, da sie den von der erfindungsgemäßen Antenne 10 gelassenen Freiraum 30 für die Rolle 14 nicht aufweisen.

Die Antenne 10 dagegen ermöglicht, die Rolle 14 in dem Freiraum 30 im Inneren der L-Form des Gehäuses 22 anzuordnen. Das zirkular polarisierte Feld in diesem Innen- oder Öffnungswinkel des Freiraums 30 erzeugt unabhängig von der Winkellage der Rolle 12 eine im Gegensatz zu der Situation der Figur 8 recht homogene und hinreichend niedrige Dämpfung des Funksignals. Damit kann über die Antenne 10 ein RFID-Transponder 16 auch in Winkelstellungen gelesen werden, in denen mit herkömmlichen nur linear polarisierten Antennen keine Kommunikation mehr möglich wäre.

Üblicherweise erzeugt eine Speiseschaltung 26 für eine zirkulare Polarisation aus mehreren linear polarisierten Einzelantennen 24a-b einen Phasenversatz, der beispielsweise der gegenseitigen Verkippung entspricht. Das ist auch erfindungsgemäß denkbar.

Die Antenne 10 gemäß Figur 3 hat aber noch eine weitere bevorzugte Besonderheit, nämlich, dass die Einzelantennen 24a-b gemeinsam in der Drehrichtung der gewünschten zirkularen Polarisation ausgerichtet sind. Anders ausgedrückt sind die Fußpunkte der inverted-F-Antennen jeweils im Uhrzeigersinn ausgerichtet oder die beiden Einzelantennen 24a-b durch Verschieben und Drehen im Uhrzeigersinn ineinander überführbar, ohne sie zu spiegeln.

Diese gemeinsame Ausrichtung der Einzelantennen 24a-b ermöglicht, die Einzelantennen 24a-b sogar phasengleich anzusteuern. Überraschenderweise ergibt sich also ohne einen Phasenversatz durch die Speiseschaltung 26 schon die gewünschte zirkulare Polarisation. Die phasengleiche Ansteuerung hat den Vorteil, dass die Speiseschaltung 26 deutlich einfacher und kompakter gestaltet werden kann. Damit das gelingt, sollte der Winkel zwischen den Einzelantennen 24a-b zumindest kleiner 180° sein. Das bedeutet, dass die Einzelantennen 24a-b wie dargestellt innen montiert sind. Eine Anordnung außen würde zu einem überstumpfen Winkel größer 180° führen, und dann genügt die gemeinsame Ausrichtung der Einzelantennen 24a-b in Drehrichtung allein nicht mehr für eine zirkulare Polarisation, vielmehr wäre dann wieder ein Phasenversatz der Speiseschaltung 26 erforderlich. In Figur 3 beträgt der Winkel bevorzugte 90°, und dabei ist der größte vorteilhafte Effekt und damit das beste Achsenverhältnis zu erwarten.

Figur 4 zeigt eine weitere Ausführungsform einer Antenne 10. In Weiterbildung der zu Figur 3 erläuterten Antenne 10 ist hier eine zusätzliche, dritte Einzelantenne 24c vorgesehen. Sie ist zwischen den beiden anderen Einzelantennen 24a-b angeordnet und im Winkel von etwa 45° dagegen verkippt. Die drei Einzelantennen 24a-c teilen somit die L-Form des Gehäuses sowohl in Anordnung als auch Winkel gleichmäßig auf, wobei von dieser vorteilhaften Anordnung und Verkippung in anderen Ausführungsformen auch abgewichen werden kann. Die weitere Einzelantenne 24c sorgt für ein nochmals geringeres und damit besseres Achsenverhältnis. Zusätzliche, vierte und weitere Einzelantennen sind vorstellbar.

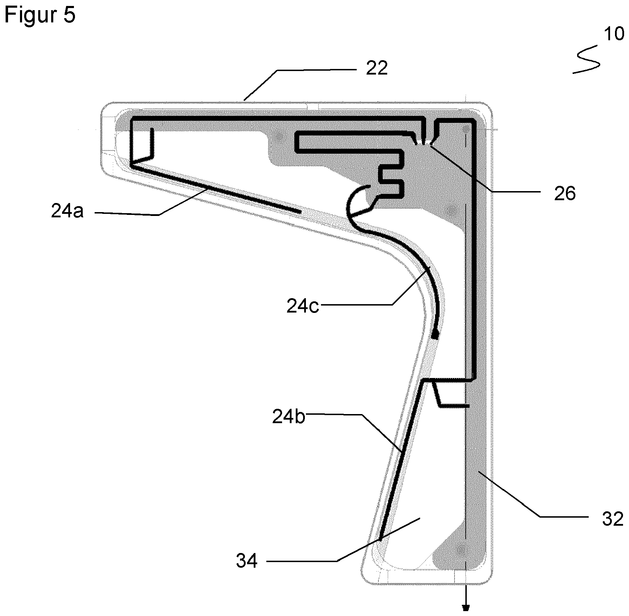

Figur 5 zeigt eine Ansicht der Antenne 10 in einer konkreten Bauform. Die L-Form des Gehäuses 22 ist ein wenig gekippt und gerundet, um besser als Halterung 12 zu fungieren beziehungsweise sich der Form einer Halterung 12 anzupassen. Die Speiseleitungen der Einzelantennen 24a-c sowie die Speiseschaltung 26 sind auf einer Platine 32 untergebracht. Im unteren Teil des Gehäuses 22 ist eine gemeinsame Massefläche 34 der Einzelantennen 24a-c vorgesehen. Die Massefläche 34 kann als dreidimensionale Struktur ausgeführt sein, beispielsweise als Frästeil aus Aluminium. Die Massefläche 34 bildet vorzugsweise einen Reflektor hinter den Armen der Einzelantennen 24a-c, um die Abstrahlung der Antenne 10 in die gewünschte Richtung zu unterstützen. Auch ein alternativer zweidimensionaler Aufbau ist denkbar.

In dieser Bauform werden ebene Einzelantennen 24a-c verwendet (PIFA). Der Vorteil dieser zweidimensionalen Variante besteht darin, dass die komplette Antennenstruktur auf einer Platine gefertigt werden kann. Es wären aber ebenso nicht ebene inverted-F Antennen vorstellbar, die Speiseleitung der F-Struktur des Antennenarms und/oder auch die Kurzschlussleitung würden sich dann in einer weiteren Raumebene bewegen. Auch die weiteren oben schon genannten alternativen Antennenformen wären möglich.

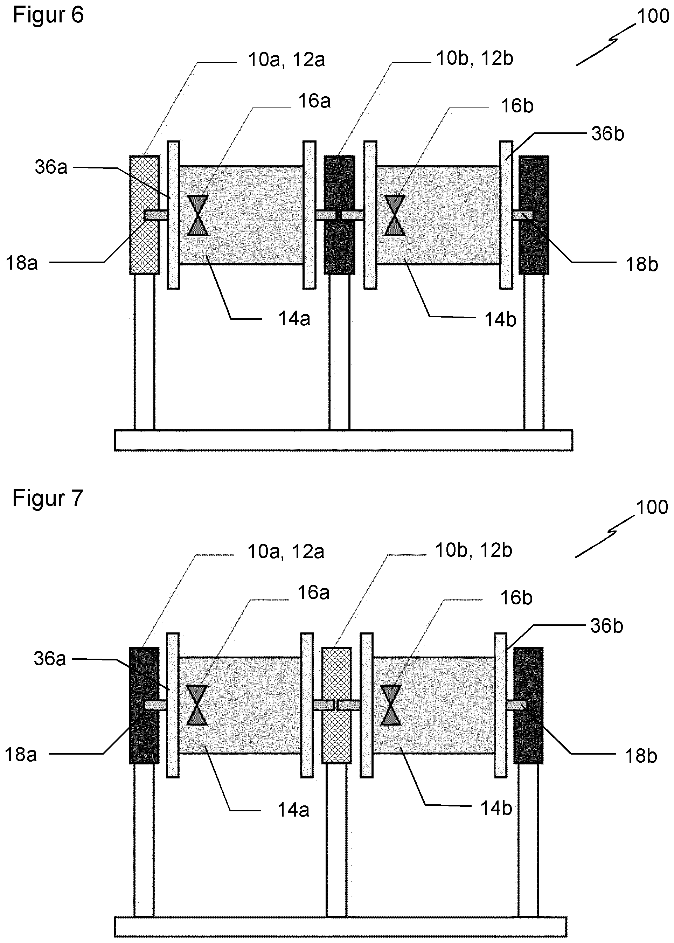

Die Figuren 6 und 7 zeigen eine Vorrichtung 100, beispielsweise eine Verpackungsmaschine, mit zwei Rollen 14a-b nebeneinander, die beide anhand ihrer RFID-Transponder 16a-b identifiziert werden sollen. Es sind zwei Antennen 10a-b in den jeweiligen Halterungen 12a-b vorgesehen. Die Rollen 14a-b werden auf einer jeweiligen Mandrel mit Welle 18a-b und die Lage der Rolle 14a-b stabilisierenden Abstandselementen 36a-b abgewickelt.

Hierbei stellt sich die zusätzliche Herausforderung, nicht versehentlich den RFID-Transponder 16a-b der falschen Rolle 14b-a zu lesen. Entsprechende Herausforderungen gibt es, wenn mehr als zwei Rollen 14a-b vorgesehen sind und diese sich in anderen Orientierungen und Anordnungen befinden als nebeneinander.

Die Antennen 10a-b sind vorzugsweise beide an denselben RFID-Leser angeschlossen, beispielsweise an jeweils eigene Ports des RFID-Lesers, und werden in einem Multiplexverfahren abwechselnd aktiviert, damit die Lesevorgänge einander nicht stören. In Figur 6 ist die linke Antenne 10a zum Identifizieren der linken Rolle 14a aktiv, in Figur 7 die mittig angeordnete andere Antenne 10b zum Identifizieren der rechten Rolle 14b. Natürlich könnte die andere Antenne 10b auch rechts angeordnet werden, aber dann wären Anpassungen erforderlich, hier eine Spiegelung der Konstruktion, und es könnte nicht einfach die Halterung 12a-b samt Antenne 10a-b dupliziert werden.

Durch Aktivierung jeweils einer Antenne 10a-b kann jede Rolle 14a-b über deren RFID-Transponder 16a-b eindeutig identifiziert werden. Es wäre vorstellbar, Schildelemente zwischen der Antenne 10b und der Rolle 14a vorzusehen, um die Vermeidung von Verwechslungen zu unterstützen.

## Patentansprüche

1. Vorrichtung (100) mit einem RFID-Leser und mit einer Halterung (12, 18) für eine Rolle (14), wobei die Halterung (12) eine Antenne (10) aufweist, die mit dem RFID-Leser verbunden ist, um einen RFID-Transponder (16) einer von der Halterung (12, 18) gehaltenen Rolle (14) zu lesen und so die Rolle (14) zu identifizieren, wobei die Antenne (10) mindestens zwei linear polarisierte Einzelantennen (24a-b) und eine Speiseschaltung (26) aufweist, die mit den Einzelantennen (24a-b) verbunden ist, wobei die Einzelantennen (24a-b) unter Einschluss eines Innenwinkels verkippt zueinander angeordnet sind und gemeinsam eine zirkular polarisierte Antenne bilden, wobei die Antenne (10) in einem L-förmigen Gehäuse (12, 22) untergebracht ist, das mit der Halterung (12) identisch, darin integriert oder daran befestigt ist, und wobei die Antenne (10) in einem Bereich des Innenwinkels einen Freiraum (30) aufweist, **dadurch gekennzeichnet, dass** die Schenkel des L-förmigen Gehäuses (12, 22) den Innenwinkel bilden.

2. Vorrichtung (100) nach Anspruch 1,
wobei der Innenwinkel ein rechter Winkel ist.

3. Vorrichtung (100) nach einem der vorhergehenden Ansprüche,
die mindestens eine zusätzliche linear polarisierte Einzelantenne (24c) in einem Winkel kleiner dem Innenwinkel zu den beiden Einzelantennen (24a-b) aufweist.

4. Vorrichtung (100) nach Anspruch 3,
wobei die zusätzliche Einzelantenne (24c) zwischen den beiden Einzelantennen (24a-b) angeordnet ist.

5. Vorrichtung (100) nach einem der vorhergehenden Ansprüche,
wobei die Einzelantennen (24a-b; 24a-c) gemeinsam im Uhrzeigersinn oder gemeinsam gegen den Uhrzeigersinn ausgerichtet sind, und wobei die Speiseschaltung (26) die Einzelantennen (24a-b; 24a-c) phasengleich ansteuert.

6. Vorrichtung (100) nach einem der vorhergehenden Ansprüche,
wobei die Einzelantennen (24a-c) Antennen des Typs Inverted-F-Antenne sind.

7. Vorrichtung (100) nach einem der vorhergehenden Ansprüche,
wobei die Vorrichtung (100) als Verpackungsmaschine ausgebildet ist und die Halterung (12, 18) eine Mandrel (18, 36) zum rotierbaren Halten einer Rolle (14) mit aufgewickeltem flächigem Verpackungsmaterial aufweist.

8. Vorrichtung (100) nach einem der vorhergehenden Ansprüche,
wobei die Halterung (12) mit der Antenne (10) nur einen Teil des Umfangs der Rolle (14) umfasst, insbesondere 90°.

9. Vorrichtung (100) nach einem der vorhergehenden Ansprüche,
die weitere Halterungen (12a-b, 18a-b) für weitere Rollen (14a-b) aufweist wobei die weiteren Halterungen (12a-b, 18a-b) jeweils eine Antenne (10a-b) mit jeweils mindestens zwei linear polarisierten Einzelantennen (24a-b) und eine damit verbundenen Speiseschaltung (26) aufweisen, die unter Einschluss eines Innenwinkels verkippt zueinander angeordnet sind, wobei die Antennen (10a-b) in einem Bereich des Innenwinkels einen Freiraum aufweisen und mit dem RFID-Leser verbunden sind, um eine jeweilige Rolle (14a-b) in einer Halterung (12a-b, 18a-b) mit einem Multiplexverfahren zu identifizieren.

## Claims

1. An apparatus (100) having an RFID reader and a holder (12, 18) for a roll (14), wherein the holder (12) comprises an antenna (10) which is connected to the RFID reader in order to read an RFID transponder (16) of the roll (14) held by the holder (12, 18) and thus to identify the roll (14), wherein the antenna (10) comprises at least two linearly polarized individual antennas (24a-b) and a feed circuit (26) which is connected to the individual antennas (24a-b), wherein the individual antennas (24a-b) are arranged relative to one another with a tilt of an internal angle and together form a circularly polarized antenna, wherein the antenna (10) is arranged in an L-shaped housing (12, 22) that is the same as the holder (12), integrated into the holder (12), or fixed to the holder(12), and wherein the antenna (10) has a free space (30) in a region of the internal angle, **characterized in that** the legs of the L-shaped housing (12, 22) form the internal angle.

2. The apparatus (100) according to claim 1,
where the internal angle is a right angle.

3. The apparatus (100) according to any of the preceding claims,
comprising at least one additional linearly polarized individual antenna (24c) at an angle smaller than the internal angle to the two individual antennas (24a-b).

4. The apparatus (100) according to claim 3,
wherein the additional individual antenna (24c) is arranged between the two individual antennas (24a-b).

5. The apparatus (100) according to any of the preceding claims,
wherein the individual antennas (24a-b; 24a-c) are jointly aligned clockwise or jointly aligned counterclockwise, and wherein the feed circuit (26) drives the individual antennas (24a-b; 24a-c) in phase.

6. The apparatus (100) according to any of the preceding claims,
wherein the individual antennas (24a-c) are antennas of the inverted-F antenna type.

7. The apparatus (100) according to any of the preceding claims,
wherein the apparatus (100) is configured as a packaging machine and the holder (12, 18) has a mandrel (18, 36) for rotatably holding the roll (14) having wound flat packaging material.

8. The apparatus (100) according to any of the preceding claims,
wherein the holder (12) with the antenna (10) occupies only a part of the circumference of the roll (14), in particular 90°.

9. The apparatus (100) according to any of the preceding claims,
the apparatus (100) comprising additional holders (12a-b, 18a-b) for additional rolls (14a-b), wherein the additional holders (12a-b, 18a-b) each comprise an antenna (10a-b), each of the antennas (10a-b) comprising at least two linearly polarized individual antennas (24a-b) and a connected feed circuit (26), which individual antennas (24a-b) are arranged relative to one another with a tilt of an internal angle, wherein the antennas (10a-b) have a free space (30) in a region of the internal angle and are connected to the RFID reader for identifying a respective roll (14a-b) in a holder (12a-b, 18a-b) by a multiplexing method.

## Revendications

1. Dispositif (100) comprenant un lecteur RFID et un support (12, 18) pour un rouleau (14), le support (12) comprenant une antenne (10) connectée au lecteur RFID pour lire un transpondeur RFID (16) d'un rouleau (14) maintenu par le support (12, 18) et pour ainsi identifier le rouleau (14), dans lequel
l'antenne (10) comprend au moins deux antennes individuelles (24a-b) à polarisation linéaire et un circuit d'alimentation (26) qui est connecté aux antennes individuelles (24a-b), les antennes individuelles (24a-b) sont disposées de manière inclinée l'une par rapport à l'autre en formant un angle intérieur et constituant ensemble une antenne à polarisation circulaire, l'antenne (10) est logée dans un boîtier en forme de L (12, 22) qui est identique au support (12), intégré dans celui-ci ou fixé à celui-ci, et l'antenne (10) présente un espace libre (30) dans une zone de l'angle intérieur,
**caractérisé en ce que**
les branches du boîtier en forme de L (12, 22) forment l'angle intérieur.

2. Dispositif (100) selon la revendication 1,
dans lequel l'angle intérieur est un angle droit.

3. Dispositif (100) selon l'une des revendications précédentes,
comprenant au moins une antenne individuelle supplémentaire (24c) à polarisation linéaire selon un angle par rapport aux deux antennes individuelles (24a-b) qui est inférieur à l'angle intérieur.

4. Dispositif (100) selon la revendication 3,
dans lequel l'antenne individuelle supplémentaire (24c) est disposée entre les deux antennes individuelles (24a-b).

5. Dispositif (100) selon l'une des revendications précédentes,
dans lequel les antennes individuelles (24a-b ; 24a-c) sont orientées conjointement dans le sens des aiguilles d'une montre ou conjointement dans le sens opposé aux aiguilles d'une montre, et le circuit d'alimentation (26) pilote en phase les antennes individuelles (24a-b ; 24a-c).

6. Dispositif (100) selon l'une des revendications précédentes,
dans lequel les antennes individuelles (24a-c) sont des antennes de type F inversé.

7. Dispositif (100) selon l'une des revendications précédentes,
le dispositif (100) étant réalisé sous forme de machine d'emballage et le support (12, 18) comprenant un mandrin (18, 36) pour maintenir de manière mobile en rotation un rouleau (14) de matériau d'emballage plat enroulé.

8. Dispositif (100) selon l'une des revendications précédentes,
dans lequel le support (12) comportant l'antenne (10) n'entoure qu'une partie de la circonférence du rouleau (14), en particulier 90°.

9. Dispositif (100) selon l'une des revendications précédentes,
comprenant d'autres supports (12a-b, 18a-b) pour d'autres rouleaux (14a-b), les autres supports (12a-b, 18a-b) comprennent chacun une antenne (10a-b) présentant au moins deux antennes individuelles (24a-b) à polarisation linéaire et un circuit d'alimentation (26) qui est connecté à celles-ci, lesdites antennes étant disposées de manière inclinée l'une par rapport à l'autre en formant un angle intérieur, les antennes (10a-b) présentant un espace libre (30) dans une zone de l'angle intérieur et étant connectées au lecteur RFID pour identifier un rouleau respectif (14a-b) dans un support (12a-b, 18a-b) par un procédé de multiplexage.
